# EUROPEAN PATENT APPLICATION

(11) **EP 1 847 828 A1**
(43) Date of publication of application: **24.10.2007**
(21) Application number: 07105825.9
(22) Date of filing: 06.04.2007
(51) Int. Cl.: G01N 21/39

(54) **Use of tunable diode lasers for controlling a brazing process**

(30) Priority: 20.04.2006 US 793553 P; 21.09.2006 US 533951
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Kazi, Shahabudin, EASTLAKE, TX 44095 (US); Oesterreich, Robert T., SUGAR LAND, TX 77479 (US)
(74) Representative: De Vleeschauwer, Natalie Y.L.D.

(57) **Abstract**

Methods and apparatus for controlling a brazing process. In one embodiment, a method includes receiving a signal from a tunable diode laser indicating a measured concentration of a gas present in an atmosphere in which the brazing process is performed. Responsive to the received signal, a control signal is issued to adjust at least one brazing process control setting affecting a change in subsequently measured concentrations of the gas present in the atmosphere.

## Description

The invention relates to the use of tunable diode lasers for controlling a brazing process

During the manufacture of radiators, condensers, and other heating, ventilation, and air conditioning (HVAC) components, the components may be subjected to a manufacturing process referred to as brazing. Brazing is typically used to join two metal components together using a filler metal. During brazing, the components and the filler metal may be heated to a temperature which is greater than the melting point of the filler metal but less than the melting point of the components being joined. The filler metal flows between the components being joined when the filler metal melts. Later, when the components and the filler metal are cooled to a temperature below the melting point of the filler metal, the filler metal solidifies and forms a connection between the components.

In some cases, to form a better connection between brazed components, a material referred to as flux may be applied to the components being brazed. During brazing, the flux may dissolve over the areas being brazed and serve to prevent oxidation or other contamination of the brazed joint, thereby improving the strength and quality of the brazed joint. Brazing may also be performed in a chamber, allowing the collection of gases within the chamber (referred to as the atmosphere of the chamber) to be better controlled.

In some cases, to better control the atmosphere within a brazing chamber, the concentration of certain gasses within the brazing chamber may be monitored. However, the atmosphere of the brazing chamber may also include caustic chemicals, making sampling of the brazing chamber gasses difficult. Furthermore, where a gas sample is extracted, analyzing the gas sample and determining how to modify the brazing process in response to the analysis may be time-consuming, thereby decreasing the efficiency of controlling the brazing process. Accordingly, what are needed are improved methods and apparatuses for controlling a brazing process.

Embodiments of the invention provide a method and apparatus for controlling a brazing process. In one embodiment, the method includes receiving a signal from a tunable diode laser indicating a measured concentration of a gas present in an atmosphere in which the brazing process is performed. Responsive to the received signal, a control signal is issued to adjust at least one brazing process control setting affecting a change in subsequently measured concentrations of the gas present in the atmosphere.

According to one embodiment the invention relates to a method comprising:
- receiving a signal from a tunable diode laser indicating a measured concentration of a gas present in an atmosphere in which the brazing process is performed and responsive to the received signal, issuing a control signal, to adjust at least one brazing process control setting affecting a change in subsequently measured concentrations of the gas present in the atmosphere.

According to a more specific embodiment the brazing process control setting is relative to a desired measured concentration.

According to another specific embodiment, the at least one brazing process control setting is a control setting for an inert gas provided within a brazing chamber of the brazing process.

In some cases, using the tunable diode laser may provide a fast and accurate measurement of contaminants within the brazing chamber. The measurement may then be used to provide improved control of process control variables (e.g., temperature, flux, and nitrogen flow) for the brazing process. For example, if measurements from the tunable diode laser indicate excess contaminants in the brazing process, then the flow of nitrogen from the nitrogen supply through one or more gas outlets into a brazing chamber for the brazing process may be increased.

According to a more specific embodiment, the method as hereinbefore defined further comprises:
- Recording trend data indicating a trend of gas usage, for example a trend of nitrogen usage in the brazing process; and
- Analyzing the trend data, to determine if the trend data indicates increased gas usage resulting from a leak in a brazing chamber of the brazing process.

According to another more specific embodiment, the method as hereinbefore defined further comprises:
- Performing a temperature measurement of the atmosphere in which the brazing process is performed; and in response to the temperature measurement,
- Calibrating the tunable diode laser.

One embodiment of the invention is implemented as a program product for use with a computer system. The program(s) of the program product defines functions of the embodiments (including the methods described herein) and can be contained on a variety of computer-readable media. Illustrative computer-readable media include, but are not limited to: (i) non-writable storage media (e.g., read-only memory devices within a computer such as CD-ROM disks readable by a CD-ROM drive) on which information is permanently stored; (ii) writable storage media (e.g., floppy disks within a diskette drive or hard-disk drive) on which alterable information is stored. Other media include communications media through which information is conveyed to a computer, such as through a computer or telephone network, including wireless communications networks. The latter embodiment specifically includes transmitting information to/from the Internet and other networks. Such computer-readable media, when carrying computer-readable instructions that direct the functions of the present invention, represent embodiments of the present invention.

In general, the routines executed to implement the embodiments of the invention, may be part of an operating system or a specific application, component, program, module, object, or sequence of instructions. The computer program of the present invention typically is comprised of a multitude of instructions that will be translated by the native computer into a machine-readable format and hence executable instructions. Also, programs are comprised of variables and data structures that either reside locally to the program or are found in memory or on storage devices. In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

One embodiment of the invention also provides an apparatus as defined in claims 6 to 14 for controlling /or performing a brazing process. The apparatus includes a control system configured to receive a signal from a tunable diode laser indicating a measured concentration of a gas present in an atmosphere in which the brazing process is performed. The control system is further configured to, responsive to the received signal, issue a control signal to adjust at least one brazing process control setting affecting a change in subsequently measured concentrations of the gas present in the atmosphere.

Embodiments of the invention also provide an apparatus for performing a brazing process. In one embodiment, the apparatus includes a brazing chamber, a tunable diode laser, a detector, and a control system. The brazing chamber is formed within a housing and containing an atmosphere in which the brazing process is performed. The tunable diode laser is configured to emit a laser beam which passes through the atmosphere in which the brazing process is performed. The detector is configured to detect the laser beam after the laser beam has passed through the atmosphere in which the brazing process is performed. The control system is configured to receive a signal from the tunable diode laser via the detector indicating a measured concentration of a gas present in the atmosphere in which the brazing process is performed. Responsive to the received signal, the control system is configured to issue a control signal to adjust at least one brazing process control setting affecting a change in subsequently measured concentrations of the gas present in the atmosphere.

For a further understanding of the nature and objects of the present invention, reference should be made to the following detailed description, taken in conjunction with the accompanying drawings, in which like elements are given the same or analogous reference numbers and wherein:
Figure 1 illustrates an exemplary brazing process according to one embodiment of the invention;
Figure 2 illustrates an exemplary tunable diode laser for use in the brazing process according to one embodiment of the invention;
Figure 3 illustrates an exemplary process for controlling the brazing process according to one embodiment of the invention;
Figure 4 illustrates an exemplary brazing process including multiple tunable diode lasers according to one embodiment of the invention;
Figure 5 illustrates exemplary tunable diode lasers for controlling the brazing process according to one embodiment of the invention; and
Figure 6 illustrates a tunable diode laser configuration for controlling the brazing process according to one embodiment of the invention.

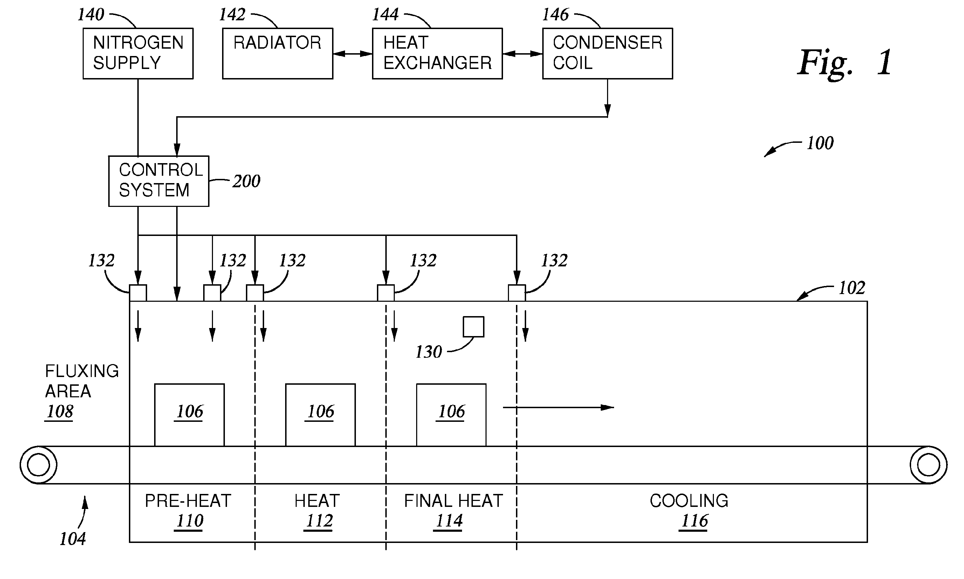

Figure 1 is a block diagram depicting an exemplary brazing process **100** according to one embodiment of the invention. The brazing process **100** may be performed in part in a brazing chamber **102** formed within a brazing housing. Where the brazing process **100** is performed in part in the brazing chamber **102,** the brazing process may be referred to as a controlled-atmosphere brazing process. While the brazing process **100** is being performed, a conveyor belt **104** may move components **106** being brazed through the brazing chamber **102** (referred to as continuous brazing). The brazing process **100** may include any brazing process known to those skilled in the art, such as the NOCOLOK (tm) brazing process which may be used for components **106** (*e.g.,* heating, ventilation, and air conditioning, or HVAC, components) made of aluminum.

During the brazing process **100,** the conveyor belt **104** may move the components **106** through different areas **108, 110, 112, 114, 116** of the brazing process **100.** For example, flux may be applied to the components **106** in a fluxing area **108.** The components may then be move through a pre-heat area **110,** a heating area **112,** a final heating area **114,** and a cooling area **116.** Each heating and cooling area **110, 112, 114, 116** may apply different temperatures to the components **106** to ensure a high-quality braze.

In one embodiment, the temperature within the brazing chamber **102** may be at least partially set using a heating system formed from a radiator **142,** heat exchanger **144,** and condenser coil **146.** A nitrogen supply **140** may also be used to add nitrogen to the brazing chamber **102** via gas outlets **132** which may produce an inert atmosphere in which the brazing may be performed. The valves may add nitrogen to one or more areas **110, 112, 114, 116** of the brazing process **100** and may also be used to create "curtains" of inert gas between the brazing areas **108, 110, 112, 114, 116.** The curtains of inert gas may act as buffers between the brazing areas **108, 110, 112, 114, 116** thereby preventing or reducing contaminants from a given stage of the brazing process **100** from moving to a subsequent stage of the brazing process **100.**

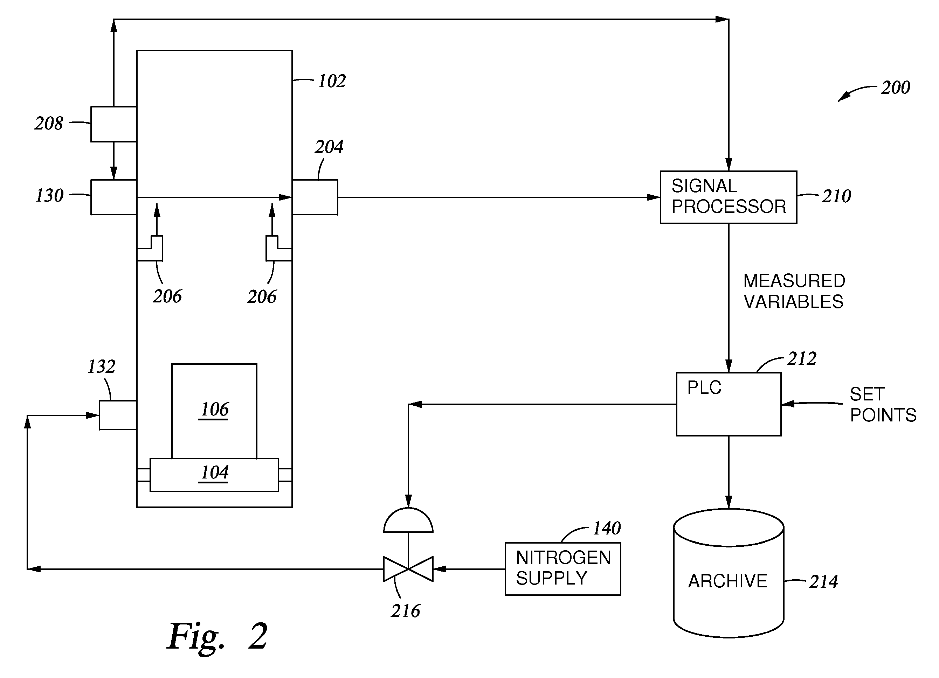

In one embodiment, a control system **200,** described below with respect to Figure 2, may be used to control the temperature and/or nitrogen flow in one or stages **108, 110, 112, 114, 116** of the brazing process **100.** As described below, in one embodiment, a tunable diode laser (TDL) **130** may be used to measure the gasses within the brazing chamber **102** and improve control of the brazing process **100.**

As described above, during brazing, the components **106** being brazed may be heated to high temperatures in an atmosphere which includes nitrogen gas. The nitrogen gas may provide an atmosphere which is mostly inert. However, if the atmosphere in the brazing chamber **102** does not include enough nitrogen, contaminants such as oxygen and/or moisture may contaminate the areas of the components **106** being brazed, resulting in a weaker brazed joint. In some cases, to reduce such contamination, the components **106** may be covered with flux (e.g., in the fluxing area **108).** When the components **106** are heated, the flux may melt and cover the area being brazed, reducing exposure to any contaminants in the brazing chamber **102.** However, where the brazing chamber **102** does not include enough nitrogen, the flux may not sufficiently prevent contamination.

In one embodiment of the invention, the tunable diode laser **130** may be used to measure the concentration of gasses within the atmosphere of the brazing chamber **102** as depicted, for example, with respect to the control system **200** in Figure 2. As described below, using the tunable diode laser **130** may provide a fast and accurate measurement of contaminants within the brazing chamber **102.** The measurement may then be used to provide improved control of process control variables (*e.g*., temperature, flux, and nitrogen flow) for the brazing process **100.** For example, if measurements from the tunable diode laser **130** indicate excess contaminants within the brazing chamber **102,** then the flow of nitrogen from the nitrogen supply **140** through one or more gas outlets **132** into the brazing chamber **102** may be increased.

During measurement, a laser beam may be directed from a tunable diode laser source **130** across the brazing chamber **102** to a detector **204** which may detect the laser beam. As the laser beam is directed across the brazing chamber **102,** gasses within the chamber **102** may interfere with the laser beam, producing an absorption spectrum which is detected by the detector **204.** Thus, the signal detected by the detector **204** may be processed by a signal processor **210** to determine the concentration of contaminants within the brazing chamber **102.**

In some cases, the concentration of contaminants (*e.g*., moisture and/or oxygen, as described above) may be measured directly from the absorption spectrum. Optionally, the spectrum may provide an indirect indication of the concentration of contaminants. For example, where the contaminants react with other chemicals during brazing to form a byproduct (*e.g*., as described below with respect to the reaction of fluoride vapors and moisture to produce hydrogen fluoride), the concentration of the contaminants may be determined by using the absorption spectrum to measure the concentration of the byproduct, from which the concentration of the contaminants may be measured. The signal processor **210** may also derive other variables which describe aspects of the brazing process, such as the dew point within the brazing chamber **102.**

While described with respect to detecting a concentration of a gas (*e.g*., either by direct measurement or by indirect measurement of byproducts), in some cases, the tunable diode laser **130** may be used merely to detect the presence or absence of contaminants (*e.g.*, whether any contaminants are present or not). As described herein, if contaminants are detected, then process control settings may be modified, for example, until the contaminants are not detected.

In one embodiment, before performing measurements with the tunable diode laser **130,** the laser **130** may be calibrated, for example, to provide greater accuracy with respect to measuring certain chemicals in the atmosphere of the brazing chamber **102.** In some cases, a temperature sensor **208** may be used to determine the temperature of the atmosphere within the brazing chamber **102.** The temperature measurement may then be provided to the tunable diode laser **130** to calibrate the laser **130.** In some cases, the measured temperature may also be provided to the signal processor **210** for use in controlling the brazing process **100.** Furthermore, in one embodiment, temperature measurements and/or calibrations of the laser **130** using the temperature measurements may be performed continuously or at set intervals, thereby maintaining correct calibration of the laser **130.**

After the signal processor **210** has received the signals from the tunable diode laser **130** and calculated values for the process variables, the measured variables may be provided to a controller (such as the programmable logic controller (PLC) **212)** which may use the measured variables to control one or more aspects of the brazing process **100.** For example, the measured variables may be compared to set points (*e.g*., desired values for the variables) to determine whether the brazing process **100** is being performed according to specifications.

If the comparison between the measured variables and the set points indicates that the process **100** is not being performed according to specifications, the PLC **212** may modify control settings for the process 100. For example, if the measured variables indicate the presence of excess contaminants within the brazing chamber **102,** the PLC **212** may automatically increase the flow of nitrogen into the brazing chamber **102** by modifying a control setting for a control valve **216** which controls introduction of nitrogen into the brazing chamber **102** and thereby reducing (*e.g*., by displacement) the concentration of contaminants in the brazing chamber **102.** The PLC **212** may also be used to control the temperature within the brazing chamber **102,** for example, in response to a measured dew point within the brazing chamber **102.** Because of the feedback provided by the tunable diode laser **130,** signal processor **210,** and PLC **212,** the control system **200** depicted in Figure 2 may be referred to as a closed loop control system (e.g., one which includes negative feedback derived comparing the measured variables and set points).

In one embodiment of the invention, the PLC **212** may be configured to automatically adjust control settings of the brazing process **100.** For example, the PLC **212** may use PID (proportional-integrated and differential) control methods known to those skilled in the art to maintain control of the brazing process **100.** The PLC **212** may also store data about the brazing process **100** (*e.g*., measured variables and control settings) in an archive **214** (*e.g*., a computer-readable medium such a disk drive which includes a database and/or in files in a file system).

The stored data in the archive **214** may be used to control the brazing process **100** and may also be used to study long-term trends of the brazing process **100.** For example, a leak in the brazing chamber **102** may cause a sudden, continued increase in nitrogen usage. By monitoring the trend data, the sudden, continued increase in nitrogen usage may be detected and used to identify the leak in the brazing chamber **102.** In some cases, the archive **214** may also be used to store processing and control programs for the signal processor **210** and PLC **212.** Optionally, all or a portion of the control programs may be stored separately, for example, in a solid-state memory of the signal processor **210** and/or PLC **212.**

In some cases, the atmosphere of the brazing chamber **102** may include corrosive chemicals which otherwise harm measurement equipment placed within the brazing chamber **102.** For example, where potassium aluminum fluoride is used as flux, when the flux is melted during brazing, the flux may release fluoride vapors which may react with trace amounts of moisture in the atmosphere of the brazing chamber **102** to form corrosive hydrogen fluoride (HF). Where measurement equipment is placed within the brazing chamber **102,** the hydrogen fluoride may corrode the equipment, thereby damaging the equipment and preventing its use.

In one embodiment, the tunable diode laser **130** may be used to obtain a measurement of the atmosphere within the brazing chamber **102** without placing the laser source **130** and/or detector **204** physically inside the brazing chamber **102** (*e.g*., by shining the laser beam through a first window of the chamber **102** and detecting the laser beam through a second window of the chamber **102**). By placing the laser source **130** and/or detector **204** outside of the brazing chamber **102,** the source **130** and/or detector **204** may be isolated from the corrosive atmosphere of the brazing chamber **102** which might otherwise harm the source **130** and/or detector **204.**

In some cases, to prevent the laser source **130** and/or detector **204** from being obscured (e.g., covered with smoke or other byproducts of the brazing process **100**), one or more purge **206** (*e.g*., a gas outlet positioned proximally to and/or aimed at an area of the brazing chamber **102**) may be used to blow an inert gas (*e.g*., nitrogen from the nitrogen supply **140)** over the areas through which the laser source **130** shines the laser beam and/or areas through which the detector **204** detects the laser beam. Thus, the purges **206** may prevent build-up of chemical byproducts of the brazing process over the source **130** and/or detector **204** which might otherwise be obscured.

It should be noted that the systems **100** and **200** described with respect to Figures 1 and 2, respectively, are merely illustrative and not limiting of the invention. Other embodiments, within the scope of the present invention, may include other configurations or types of devices and may perform a brazing in a different manner.

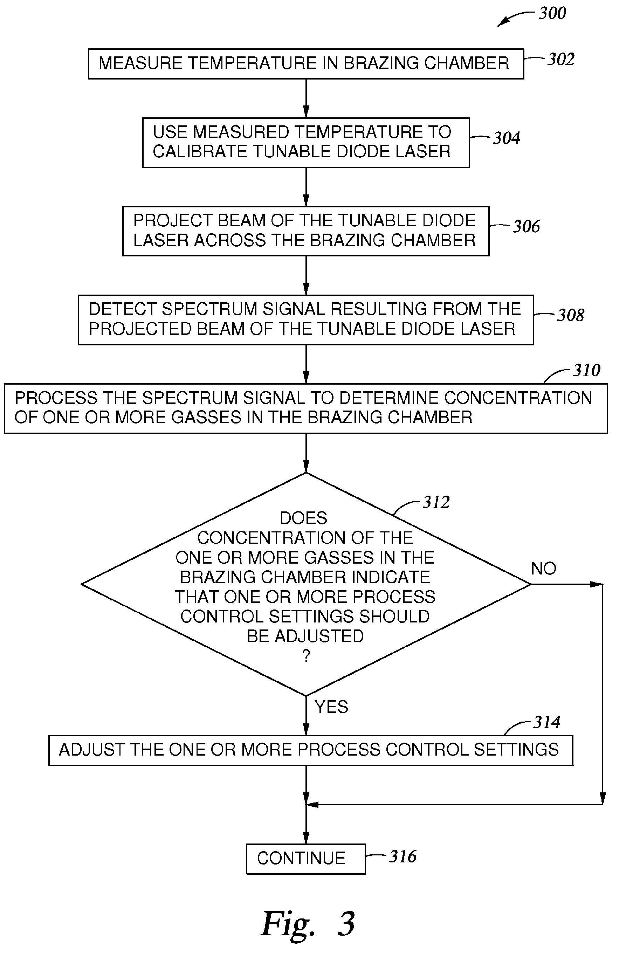

Figure 3 is a flow diagram depicting a process **300** for controlling the brazing process **100** according to one embodiment of the invention. In one embodiment, the process **300** may be performed by the signal processor **210** and PLC **212** working in conjunction. Optionally, another configuration of processors or circuitry may be used. For example, in one embodiment, a single processor may be used for both signal processing and control. Separate circuitry may also be provided, for example, to automatically make measurements using the temperature sensor **208** and/or calibrate the tunable diode laser **130** using the temperature measurement.

The process **300** may begin at step **302** where the temperature in the brazing chamber **102** is measured, for example, using the temperature sensor **208.** At step **304,** the measured temperature may be used to calibrate the tunable diode laser **130.** At step **306,** a beam of the tunable diode laser **130** may be projected across the brazing chamber **102.** Then, at step **308,** a spectrum signal resulting from the projected beam of the tunable diode laser **130** may be detected, for example, using detector **204.**

At step **310,** the spectrum signal may be processed, for example, using signal processor **210,** to determine the concentration of one or more gasses in the brazing chamber **102** (*e.g.*, oxygen, moisture, hydrogen fluoride, etc.). At step **312,** a determination may be made of whether the concentration of the one or more gasses in the brazing chamber **102** indicates that one or more process control settings (*e.g*., the flow of nitrogen, the temperature of one or more stages of the brazing process **100,** etc.) should be adjusted. As described above, the determination may include a comparison of measured process variables to set points for the brazing process **100** to determine if the process **100** is being performed according to specification.

If a determination is made that the process **100** is not being performed according to specification, the one or more process control settings may be adjusted at step **314.** For example, if the tunable diode laser measurements indicate that there are too many contaminants in the brazing chamber **102,** the flow of nitrogen from the nitrogen source **140** through one or more of the outlets **132** may be increased. The flow may be changed, for example, by using the PLC **212** to modify a control valve setting for a control valve **216** which controls the flow of nitrogen from the nitrogen source **140.** If the level of contaminants in the brazing chamber is sufficiently low, then the flow of nitrogen may be decreased.

The process **300** may continue at step **316.** For example, the tunable diode laser **130** may be used to make multiple measurements, either constantly or at several intervals. Furthermore, calibration of the tunable diode laser **130** may be maintained, *e.g*., constantly, at fixed time intervals, after a predetermined number of measurements, or as otherwise desired.

As described above with respect to Figures 1-3, the tunable diode laser may provide fast, efficient measurements of the conditions within the brazing chamber **102.** Because the measurements are made quickly and efficiently, control over the brazing process **100** may be improved, both by automating the control system **200** and by making the control system **200** more responsive to changes in the brazing process **100.** Where the brazing process **100** changes over time, for example, due to operating conditions, during initial break-in of the brazing process **100,** and as the brazing process **100** ages, the control system **200** may automatically correct changes in the brazing process **100,** thereby improving the long-term efficiency of the process **100.** Additional exemplary configurations for measurement and control of the brazing process **100** are also described below.

In one embodiment of the invention, measurement of the atmosphere of the brazing chamber **102** may be performed in an area which is separate from the area being controlled by the PLC **212.** For example, with respect to Figure 1, a single tunable diode laser **130** may be used to measure in the atmosphere of the brazing chamber **102** in the final heat stage **114** of the brazing process **100,** while the PLC **212** may be used to modify control of the nitrogen flow from the nitrogen supply **140** to the pre-heat stage **110** of the brazing chamber **102.** Optionally, a single laser **130** may also be used to control aspects (such as the flow of nitrogen) in multiple stages **108, 110, 112, 114** of the brazing process **100.**

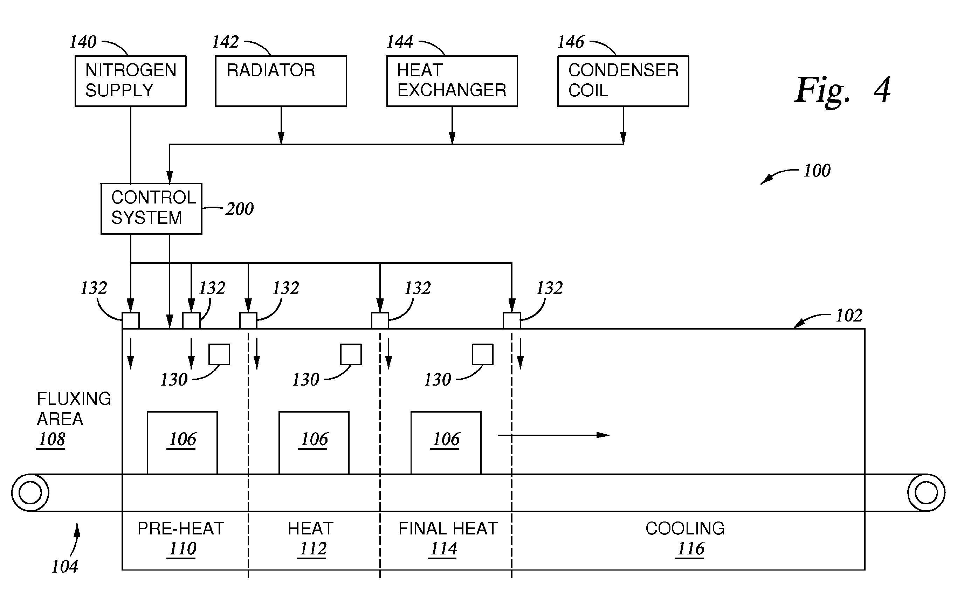

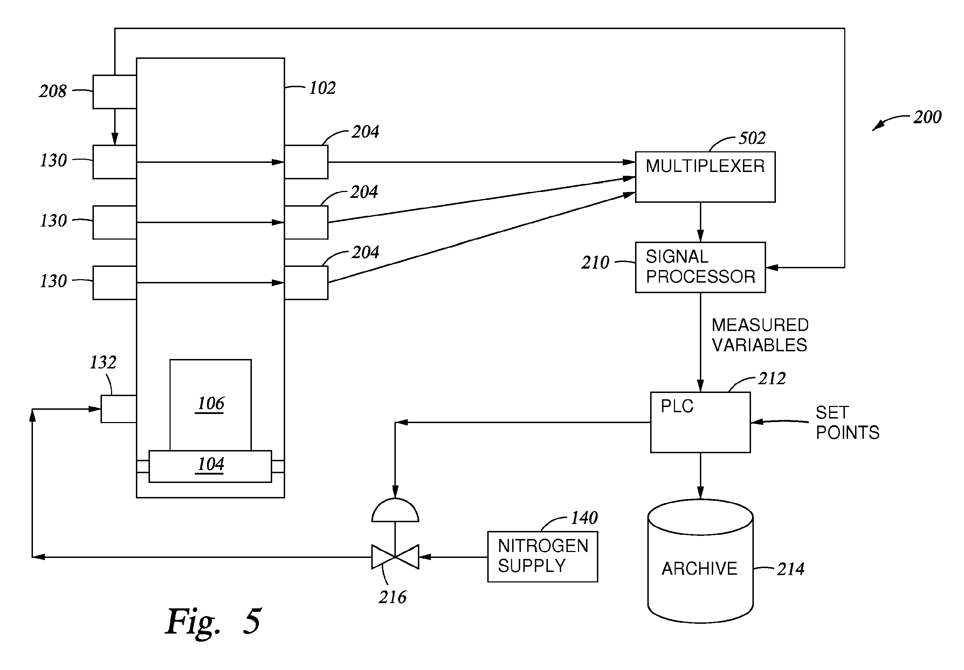

In some cases, multiple tunable diode lasers may also be used to measure the atmosphere in multiple stages (*e.g*., two or more of stages **108, 110, 112, 114, 116**) of the brazing process **100** as depicted, for example, in Figure 4. The multiple lasers **130** may each be calibrated, for example, with a single temperature sensor **208** as depicted in Figure 5. Optionally, multiple temperature sensors **208** may be used to calibrate the lasers **130,** for example, with one temperature sensor being provided to calibrate each of the lasers **130,** respectively. Output from each of the tunable diode lasers **130** may be provided to a multiplexer **502** which provides data for each of the signals to the signal processor **210.** The signal processor **210** may then analyze data from each of the tunable diode lasers **130** to determine the concentration of one or more gasses in each of the stages **110, 112, 114, 116** which include a tunable diode laser. The results of the analysis (*e.g*., the measured process variables) may then be provided from the signal processor **210** to the PLC **212.** By using data from multiple tunable diode lasers **130** to measure the atmosphere in multiple stages **110, 112, 114, 116** of the brazing process **100,** the PLC **212** may provide improved control for each stage **110, 112, 114, 116** of the brazing process **212.**

In one embodiment of the invention, each of the tunable diode lasers **130** may be placed at a height or directed in such a manner that the path of the laser beam from a tunable diode laser **130** to a detector **204** does not cross into an area occupied by a component **106** being brazed. By directing the path of the laser beam so that it is not obscured by the components **106,** measurements of the atmosphere within the brazing chamber **102** may be performed as components **106** are being brazed at a given location. Optionally, the tunable diode laser **130** may be positioned in such a manner that the path of the laser beam is occasionally obscured by components **106** (*e.g*., as the components **106** move down the conveyor belt **114**). In such a case, measurements with the tunable diode laser **130** may be performed intermittently, for example, such that measurements are performed between the moving components **106** when the path of the laser beam is not obscured.

In general, a given detector **204** may be positioned in any manner such that the detector **204** detects signals from one or more tunable diode lasers **130.** As depicted, for example, with respect to Figure 1, the detector **204** may be positioned directly opposite the tunable diode laser **130** in the brazing chamber 102. Optionally, the tunable diode laser **130** and detector **204** may be placed at an angle with respect to each other to direct the laser beam of the tunable diode laser **130** across a larger portion of the brazing chamber **102.** In some cases, by directing the laser beam across a larger portion of the brazing chamber **102** (and thus through a larger volume of the gasses in the brazing chamber **102**), a more accurate (*e.g*., more defined) absorption spectrum may be obtained via the detector **204,** thereby improving the accuracy of the measured variables provided to the PLC **212,** which may in turn result in more accurate control of the brazing process **102.**

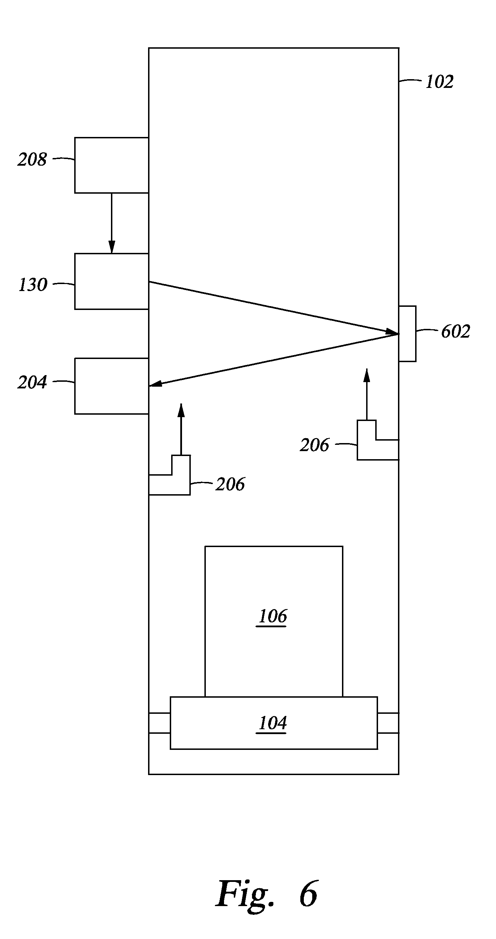

Furthermore, in one embodiment of the invention, the laser beam provided by the tunable diode laser **130** may be directed across an increased volume of the brazing chamber **102** by reflecting the laser beam off of one or more reflectors **602** (e.g., a mirror or other reflective surface) and into the detector **204** as depicted in Figure 6. The tunable diode laser **130,** detector **204,** and/or the reflector **602** may be protected by one or more purges **206** which provide a buffer of inert gas (e.g., nitrogen) between the measurement instruments **130, 204, 602** and the corrosive atmosphere of the brazing chamber **102.** By reflecting the laser beam from the tunable diode laser **130,** the path of the laser beam between the laser source **130** and the detector **204** may, for example, be doubled. As described above, by increasing the path length of the laser beam, the absorption spectrum detected by the detector **204** may be improved, thereby resulting in improved control of the brazing process **100.**

Preferred processes and apparatus for practicing the present invention have been described. It will be understood and readily apparent to the skilled artisan that many changes and modifications may be made to the above-described embodiments without departing from the spirit and the scope of the present invention. The foregoing is illustrative only and that other embodiments of the integrated processes and apparatus may be employed without departing from the true scope of the invention defined in the following claims.

## Claims

1. A method of controlling a brazing process, the method comprising:
- Receiving a signal from a tunable diode laser indicating a measured concentration of a gas present in an atmosphere in which the brazing process is performed; and responsive to the received signal,
- Issuing a control signal to adjust at least one brazing process control setting affecting a change in subsequently measured concentrations of the gas present in the atmosphere.

2. The method of claim 1, further comprising:
- Recording trend data indicating a trend of gas usage in the brazing process; and
- Analyzing the trend data to determine if the trend data indicates increased gas usage resulting from a leak in a brazing chamber of the brazing process.

3. The method of claim 1 or 2, further comprising:
- Performing a temperature measurement of the atmosphere in which the brazing process is performed; and in response to the temperature measurement,
- Calibrating the tunable diode laser.

4. The method of one of claim 1 to 3, wherein the measured concentration of a gas is measured in a final heat stage of the brazing process.

5. The method of one of claim 1 to 4, wherein the measured concentration is used to determine one of a hydrogen fluoride concentration and a dew point for the brazing process.

6. An apparatus for controlling and /or performing a brazing process, the apparatus comprising:
a brazing chamber formed within a housing and containing an atmosphere in which the brazing process is performed;
a tunable diode laser configured to emit a laser beam which passes through the atmosphere in which the brazing process is performed;
a detector configured to detect the laser beam after the laser beam has passed through the atmosphere in which the brazing process is performed;
a control system configured to:
receive a signal from the tunable diode laser via the detector indicating a measured concentration of a gas present in the atmosphere in which the brazing process is performed; and
responsive to the received signal, issue a control signal to adjust at least one brazing process control setting affecting a change in subsequently measured concentrations of the gas present in the atmosphere.

7. The apparatus of claim 6, wherein the control signal adjusts the at least one brazing process control setting relative to a desired measured concentration.

8. The apparatus of claim 6 or 7, wherein the at least one brazing process control setting is a control setting for an inert gas provided within the brazing chamber.

9. The apparatus of one of claim 6 to 8, wherein the control system is further configured:
- To record trend data indicating a trend of gas usage in the brazing process; and
- To analyze the trend data to determine if the trend data indicates increased gas usage resulting from a leak in a brazing chamber of the brazing process.

10. The apparatus of one of claim 6 to 9, wherein the control system is further configured:
- To perform a temperature measurement of the atmosphere in which the brazing process is performed; and in response to the temperature measurement,
- To calibrate the tunable diode laser.

11. The apparatus of one of claim 6 to 10, further comprising:
a purge outlet positioned to blow an inert gas over a surface through which a laser beam from the tunable diode laser is passed, thereby preventing the surface from being obscured.

12. The apparatus of one of claim 6 to 11, further comprising:
A reflective surface opposite the tunable diode laser, wherein the reflective surface is positioned to reflect a laser beam emitted from the tunable diode laser into a detector which is used to detect the signal from the tunable diode laser.

13. The apparatus of one of claim 6 to 12, wherein the tunable diode laser is positioned outside of the brazing chamber.

14. The apparatus of one of claim 6 to 13, wherein the control signal adjusts a brazing process control setting for one of an amount of flux applied to a component being brazed, a temperature for at least a portion of the brazing process, and a flow of gas for the brazing process.
